# EUROPEAN PATENT APPLICATION

(11) **EP 3 424 739 A1**
(43) Date of publication of application: **09.01.2019**
(21) Application number: 17179769.9
(22) Date of filing: 05.07.2017
(51) Int. Cl.: B41M 3/06, B29D 11/00, G02B 3/00, B41M 7/00

(54) **METHOD OF PRINTING 3D-MICROOPTIC IMAGES ON PACKAGING SYSTEMS**

(71) Applicant: The Procter & Gamble Company, Cincinnati, OH 45202 (US)
(72) Inventor: MEADOWS, Gant, Egham, TW20 9NW (GB); DE BUHR, Harald, 61476 Kronberg (DE)
(74) Representative: Sauvaître, Thibault Bruno

(57) **Abstract**

The invention relates to a method for printing 3D-microoptic images on packaging systems in an inline process comprising providing a flexible substrate, printing a plurality of images on at least part of the first major surface of the substrate, applying a transparent varnish layer on the printed first major surface of the substrate, and forming a plurality of relief features on the outer surface of the varnish layer.

## Description

### FIELD OF THE INVENTION

The present invention relates to a method for printing 3D-microoptic images on packaging systems in an inline process, and 3D-microoptic image packaging systems.

### BACKGROUND

Films used in products and packages can benefit from micro-sized patterns. Such patterns can provide various effects, such as optical effects (e.g. lensing, holographics), tactile effects (e.g. perceived softness), and/or functional effects (e.g. surface characteristics). Imparting 3D-effects can be realized by taking advantage of the moire-magnifier principle, wherein a substrate comprises images and micro-sized patterns with a specific relative arrangement. 3D-microoptic films are for example provided by Nanoventions, Inc., Visual Physics, LLC, Rolling Optics, AB, and Grapac Japan Co., Inc.

Especially, in the field of packaging systems, 3D-microoptic decoration techniques are of great interest, since they provide a high impact on the first impression of a product and serve as an eye-catcher with high holding power for consumers to stop at a product.

Up to now, 3D-microoptic films are made of a plastic foil with images printed on one side, and micro-sized patterns printed on the other side. However, the known films still have major drawbacks:
The 3D-microoptic printing processes are limited to substrates with images printed on one side, and micro-sized patterns printed on the other side. Therefore, the substrates must be transparent for the images to be apparent from the other side of the substrate. Thus, the substrates suitable for 3D-microoptic films are very limited.

The costs for 3D-microoptic printing are very high. There are several different ways to impart micro-sized patterns onto films. A known approach is to use curable coatings and patterning equipment to impart such patterns. This approach can be employed in several ways. One way is to use a rigid (or semi-rigid) printing plate (e.g. a metal plate) with etched or engraved relief features, however such plates can be expensive. Another way is to use a polymer printing plate that is made using selective masking, however selective masking requires precise equipment control and often uses harsh solvents in a wash-out step. Still another way is to use a continuous roll of a textured casting film, however such rolls require a separate web-handling apparatus and the rolls have low life-times and therefore must be regularly replaced.

The known offline processes are slow and require high equipment control for each step of the process.

### SUMMARY

Based on the above drawbacks, there is still a need for new processes for creating 3D-microoptic effects on a variety of flexible substrates in a fast and cost effective way.

According to the present invention, a process for making 3D-microoptic packaging systems in an inline process is provided. The method comprises providing a flexible substrate, printing a plurality of images on at least part of the first major surface of the substrate, applying a transparent varnish layer on the printed first major surface of the substrate, and forming a plurality of relief features on the outer surface of the varnish layer.

Such process can be used on conventional flexographic printing equipment, and can last for many thousands of cycles. The images can be printed by using common colour ink stations (typically CMYK) with flexographic printing plates. A varnish station with commercially available varnishes and a flexographic casting plate can be used to create the relief features. Thereby, the process is quick, easy and inexpensive to use. Due to being an inline process, the micro-sized patterns can be directly printed on products and packages in the same process as the images, wherein such patterns can provide various optical effects. Thus, equipment, calibrating and positioning control of the substrate is facilitated with regard to an offline process. Therefore, the process and the resulting 3D-microoptic image packaging systems are much cheaper than those printing on both sides of the substrate (micro-images on the back-side and highly-registered micro-lenses on the front side) using slower and more complex and expensive print processes, e.g. gravure and screen. Further, the process allows for a wide variety of flexible substrates which may be transparent and non-transparent.

### BRIEF DESCRIPTION OF THE INVENTION

The present invention relates to a method for printing 3D-microoptic images on packaging systems by an in-line process. The method comprises providing a flexible substrate having a first and a second major surface; printing a plurality of images on at least part of the first major surface of the substrate to provide a substrate with a printed first major surface; applying a transparent varnish layer on the printed first major surface of the substrate, wherein the varnish layer has an inner surface being in contact with the printed first major surface of the substrate and an outer surface facing away from the substrate; and forming a plurality of relief features on the outer surface of the varnish layer.

The present invention further relates to 3D-microoptic image packaging systems comprising a flexible substrate having a first and a second major surface, a plurality of images on at least part of the first major surface, a transparent varnish layer on the first major surface of the substrate superimposing the printed images, wherein the varnish layer has an inner surface being in contact with the printed first major surface of the substrate and an outer surface facing away from the substrate, and wherein the varnish layer has a plurality of relief features on the outer surface of the varnish layer.

### BRIEF DESCRIPTION OF THE DRAWINGS

While the specification concludes with claims particularly pointing out and distinctly claiming the present invention, it is believed that the same will be better understood from the following description read in conjunction with the accompanying drawings in which:
- Fig. 1: Schematic view of a printed substrate with images
- Fig 2A-2C: Top views of varnish layers with continuous relief features
- Fig. 3A-3I: Top views of varnish layers with discontinuous relief features
- Fig. 4A-G: Side views of varnish layers with relief features
- Fig. 5: Side view of a microoptic image packaging system
- Fig. 6: Schematic view of a 3D micro-optic image from a viewer's perspective
- Fig. 7: Schematic view of a method for making 3D-microoptic image packaging systems
- Fig. 8: Flowchart of making a patterned flexographic printing or casting plate
- Fig 9A-9J: End views of the steps of making a patterned flexographic printing or casting plate
- Fig. 10: Flowchart of making a patterned flexographic printing or casting plate
- Fig 11A-11B: End views of the steps of making a patterned flexographic printing or casting plate
- Fig. 12: Flowchart of making 3D-microoptic image packaging systems
- Fig. 13: Schematic view of flexographic printing press for making 3D-microoptic image packaging systems

### DETAILED DESCRIPTION OF THE INVENTION

A "3D-microoptic image packaging system" according to the invention is a packaging system having images printed on its surface that exhibit 3D-optical effects for a viewer.

An "in-line process" is a repetitive manufacturing process in which each product passes through the same sequence of operations, wherein the process does not have to be stopped and restarted for each new product. An example of an in-line process is the printing of newspapers.

"Substrates" according to the present invention are all materials which are suitable for printing and which have a first and a second major surface. Preferably, substrates have a sheet-like shape.

"Flexible substrates" according to the present invention are substrates which are reversibly deformable and which are suitable for use in an in-line process.

A "relief feature" according to the present invention is a feature protruding from the minimum expansion of the varnish in perpendicular direction from the substrate surface.

The "image size" defines the maximum expansion of an image.

The term "micro" according to the present invention means an expansion of less than 1 mm, preferably 1 µm to less than 1 mm.

"Micro-images" according to the present invention are images with an image size of less than 1 mm.

"Micro-lenses" according to the present invention are lenses with a maximum height or width or both of less than 1 mm.

According to the present invention, the "distance between images" characterizes the minimum distance between images. Accordingly, the "distance between relief features" characterizes the minimum distance between relief features.

"Height" according to the present invention is defined as the expansion in perpendicular direction from a surface. For example, the height of the varnish layer is the expansion in perpendicular direction from the substrate surface. For example, the height of the relief features is the difference between the maximum expansion of the varnish in perpendicular direction from the substrate surface and the minimum expansion of the varnish in perpendicular direction from the substrate surface.

In connection with layers, the height may also be called "thickness". The thickness of a structured layer is the minimum expansion of the layer in perpendicular direction from a surface.

A "plurality" according to the present invention is more than one.

According to the present invention, "transparent" means that a material has a transparency (I/I₀) of at least 0.5 in a wavelength range of from 400 to 780 nm and a material layer thickness of 10 mm.

"Porous" according to the present invention defines materials with a pore size of at least 1 nm. Materials having lower pore sizes, i.e., in the sub-nanometer range, or no pores are "non-porous" materials. The pore size can be determined by ASTM D4404.

A "photopolymer" according to the application under examination is a polymeric material that can be cured by electromagnetic irradiation, e.g., light.

The present invention relates to a method for printing 3D-microoptic images on packaging systems by an in-line process comprising
a. providing a flexible substrate having a first and a second major surface;
b. printing a plurality of images on at least part of the first major surface of the substrate to provide a substrate with a printed first major surface;
c. applying a transparent varnish layer on the printed first major surface of the substrate, wherein the varnish layer has an inner surface being in contact with the printed first major surface of the substrate and an outer surface facing away from the substrate; and
d. forming a plurality of relief features on the outer surface of the varnish layer.

### Step a.

The method comprises the provision of a flexible substrate having first and second major surfaces. The substrate may be of any shape, for examples sheet-like. The substrate may have a thickness of from 1 µm to 10 mm, preferably of from 2 µm to 1 mm.

The flexible substrate may comprise polymeric materials, metal materials, woven or non-woven fabrics, paper, or combinations thereof, preferably a polymeric material. The flexible substrate is preferably a plastic foil or a plastic film.

The polymeric material is preferably selected from the group consisting of high density polyethylene, low density polyethylene, linear low density polyethylene, polypropylene, polyethylene terephthalate, and combinations of two or more thereof.

The substrate may be porous or non-porous. Porous substrates may for example be micro-porous substrates with a pore size of less than 1 µm, for example of less than 500 nm or in a range of from 1 to 500 nm or from 2 to 200 nm. Preferred substrates according to the present invention are non-porous.

### Step b.

The method comprises printing a plurality of images on at least part of the first major surface of the substrate to provide a substrate with a printed first major surface.

The images may be printed by any method known in the art which is suitable for printing images on a major surface of a flexible substrate in an in-line process. Preferably, the images may be printed by a flexographic printing press using a flexographic printing plate.

General flexographic printing procedures are known in the art. An exemplified procedure is described as follows: A positive mirrored master of an image is created in a flexographic printing plate. Such plates can be made by analog or digital platemaking processes which are described in further detail below. Therein, the image areas are raised above the non-image areas on the plate. Ink is transferred to the plate in a uniform thickness. The substrate is then pressed to the inked flexographic printing plate, e.g., by sandwiching it between the plate and an impression cylinder, to transfer the image. For drying the ink, different methods are available, like feeding the substrate through a dryer or curing the ink by irradiating the substrate with UV light.

Preferably, the images are printed by flexographic printing via ink-stations on a flexographic printing press using a flexographic printing plate.

Where an image comprises multiple colors, preferably for each color a different flexographic printing plate is used. In this case, the plates are made, and put on a cylinder which is placed in the printing press. For the picture to be completed, the image from each flexographic printing plate is transferred to the substrate.

The images printed on the substrate are not limited in their size, shape and color. The images may be the same or different. Preferably, at least some images are the same. For example, all images are the same. The printed surface may comprise two or more, for example two or three or four or five or more than five, arrays of images, wherein the images within an array are the same.

The images may be arranged in a regular pattern. Where the substrate comprises arrays of images, the images within an array are preferably arranged in a regular pattern. The pattern in different arrays may be the same or different.

Preferably, the images are micro-images. The image size may be at least 300 µm, preferably in the range of from 300 µm to less than 1 mm, for example in the range of from 400 to 800 µm. The images may have the same or different image sizes. Where the substrate comprises arrays of images, the images within an array preferably have the same image size. The image size in different arrays may be different.

The distance between the images may be in the range of from 3 µm to 3 mm, preferably in the range of from 30 µm to 3 µm, more preferably in the range of from 100 to 500 µm. It may be preferred that the distance between the images is the order of the image size, for example differing by no more than 50 % or by no more than 30 % or by no more than 10 %. The ratio of image size to image distance may be in the range of from 10:1 to 1:100, preferably in the range of from 5:1 to 1:50 or from 2:1 to 1:10. Where the substrate comprises arrays of images, the images within an array preferably have the same image distance. The image distance in different arrays may be different.

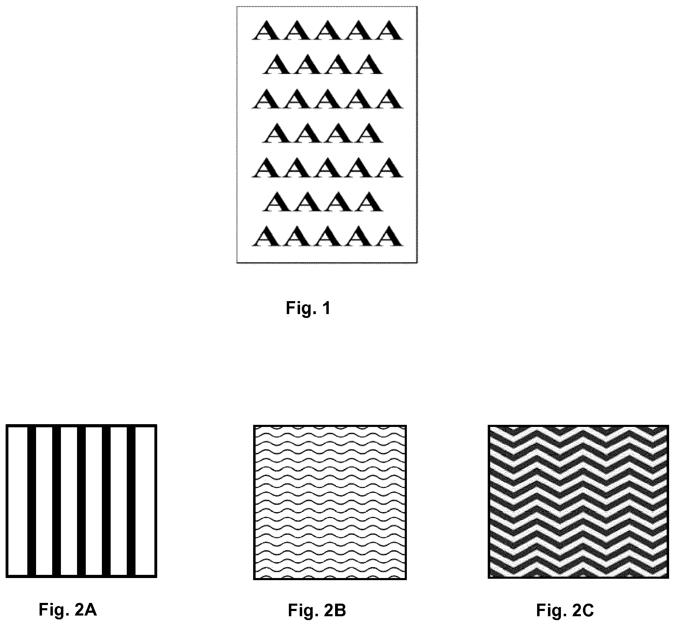

A preferred arrangement of images is shown in Fig. 1.

### Step c.

The method comprises applying a transparent varnish layer in the printed first major surface of the substrate. The varnish layer has an inner surface which is in contact with the printed first major surface of the substrate, and an outer surface facing away from the substrate.

According to the present invention, the varnish layer may be formed by applying a varnish composition to the printed surface first major surface of the printed substrate and subsequent hardening to form the varnish layer. For example, the varnish composition may be applied by spraying, dripping, rolling, flooding, spin coating or dip coating processes.

The varnish composition may be any varnish known in the art which is compatible with the respective substrate material, which is suitable for coating a flexible substrate and which is suitable for use in an in-line process. Preferably the varnish is heat curable, light curable or both, preferably UV curable.

The varnish may for example comprise polyolefins like polyethylene, preferably LLDPE, LDPE, MDPE, HDPE, or polypropylene, polyesters like polyethylene terephthalate, polyamides like nylon, halogenated vinyl resins like polyvinyl chloride, poly(meth)acrylates, biodegradable plastics, polyurethanes, alkyd resins, epoxy phenolic resins, or combinations of two or more thereof.

Biodegradable plastics are plastics that are decomposed by the action of living organisms like bacteria, in particular bioplastics. They may for example be selected from aliphatic polyesters, polyanhydrides, polyvinyl alcohol, starch derivatives, cellulose esters like cellulose acetate and nitrocellulose, and polyethylene terephthalate. Bioplastics are plastics derived from renewable biomass sources like vegetable fats and oils, corn starch or microbiota, preferably composed of starches, cellulose or biopolymers. They may for example be selected from starch-based plastics, cellulose-based plastics, protein-based plastics, polyhydroxyalkanoates like poly-3-hydroxybutyrate, polyhydroxyvalerate, polyhydroxyhexanoate, polylactic acid, and polyhydroxyurethanes.

Preferably the varnish is an acrylic varnish. An acrylic varnish according to the invention may be a varnish comprising poly(meth)acrylate, i.e., polyacrylic acid, polymethacrylic acid, polyacrylic acid derivatives like carboxylates, esters, amides or salts thereof, polymethacrylic acid derivatives like carboxylates, esters, amines or salts thereof, copolymers thereof, or combinations of two or more thereof. Preferably, the salts are alkaline metal salts, preferably sodium salts, in particular sodium polyacrylate.

Preferably the acrylic varnish comprises a structural element of formula (I) or (II) 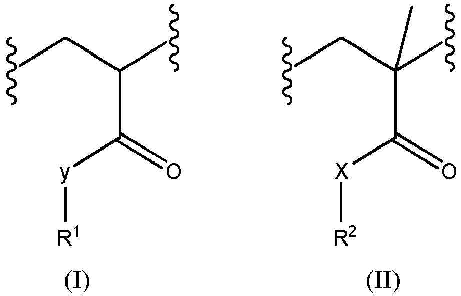
wherein X and Y may be selected from N and O, preferably O; and
R¹ and R² may be selected from H, C₁-C₁₈ alkyl, C₁-C₁₈ alkenyl, C₆-C₁₄ aryl, preferably from H, methyl and ethyl.

### Step d.

The method comprises forming a plurality of relief features on the outer surface of the varnish layer. The relief features may be formed on the varnish layer by any method known in the art which is suitable for structuring a coating in an in-line process.

The relief features on the varnish layer may be formed by a filmless casting process using a flexographic casting plate. This process may be similar to the above described flexographic printing process. Therein, the casting plate is used to print varnish relief features over the top of the images.

For example, a mirrored master of the relief features is created in a flexographic casting plate. Methods of making such plates are described in further detail below. The relief feature areas are raised above the non-relief feature areas on the plate. Varnish is transferred to the plate. The printed substrate is then pressed to the flexographic casting plate, e.g., by sandwiching it between the plate and an impression cylinder, to transfer the varnish and thereby form the relief features. For curing the varnish, different methods are available, like heat curing or UV curing.

The relief features are not limited in their size and shape. They may be the same or different. Preferably at least some relief features are the same. For example, all relief features are the same. The varnish layer may comprise two or more, for example two or three or four or five or more than five, arrays of relief features, wherein the relief features within an array are the same.

For example, the relief features may be continuous in one direction of the substrate and discontinuous in a perpendicular direction. From a top view such continuous relief features are preferably straight lines, waved lines or zigzag lines. Preferred shapes of continuous relief features are shown in Figs. 2A-2C.

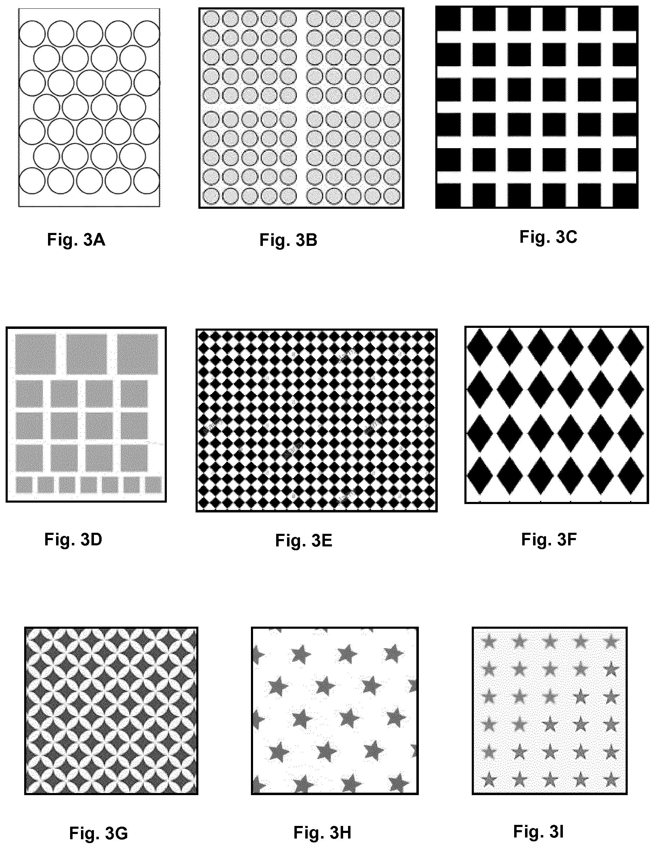

For example, the relief features may be discontinuous. According to the invention, such discontinuous relief features are not continuous in one direction of the substrate, and the ratio of the smallest expansion to the largest expansion of one relief feature is in the range of from 1:1000 to 1:1, preferably 1:100 to 1:1, more preferably 1:10 to 1:1. From a top view such discontinuous relief features may be round or angular, for example circular, elliptical, angular with 3 or 4 or 5 or 6 or 8 or more than 8 corners. Preferably, angular relief features are selected from the group consisting of triangles, squares, rectangles, rhombi, and regular polygons like pentagons, hexagons, octagons, or stars. Preferred shapes of discontinuous relief features are shown in Figs. 3A-3I.

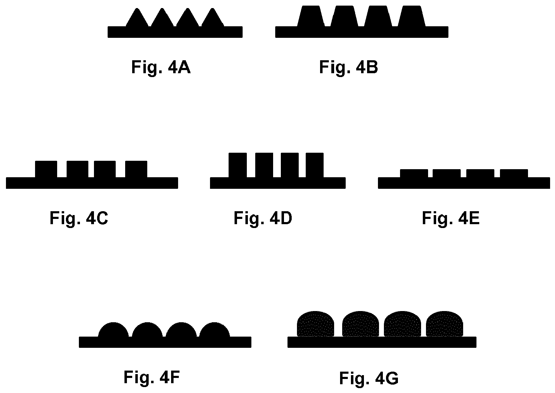

From a side view, the relief features may for example have the shape of triangles, trapezoids, squares, rectangles, or partial circles. Preferred side-view shapes of the relief features are shown in Figs. 4A-4G.

Preferably, the relief features are in the shape of partial spheres, partial ellipsoids, cylinders, cones, tetrahedrons, pyramids, hexagonal pyramids, octagonal pyramids, cubes, cuboids, pentagonal prisms, hexagonal prisms. The relief features are preferably in the shape of partial spheres.

The relief features may be arranged in a regular pattern. Where the substrate comprises arrays of relief features, the relief features within an array are preferably arranged in a regular pattern. The pattern in different arrays may be the same or different.

Preferably, the relief features have a height in the range of from 50 nm to 150 µm, preferably from 10 to 30 µm

Preferably, the relief features are micro-lenses. The size of the relief features may be at least 300 µm, preferably in the range of from 300 µm to less than 1 mm, for example in the range of from 400 to 800 µm. The relief features may have the same or different image sizes. Where the substrate comprises arrays of relief features, the relief features within an array preferably have the same size. The size of the relief features in different arrays may be different.

Any repeat pattern of relief features and images and their arrangement relative to each other can be used as long as an interference pattern (a moire magnification effect) is created.

The pattern of the relief features and the images may be the same or different. It is preferred that the relief features and the images have an identical pattern. It may also be preferred that each image is superimposed with a relief feature.

The ratio of the maximum diameter of the relief features to the maximum diameter of the images may be at least 1, for example the ratio is in the range of from 50:1 to 1:10, or 10:1 to 1:2, or 5:1 to 1:1.2, or 2:1 to 1:1, more preferably from 1.3:1 to 1:1. Where different arrays of images and/or relief features are arranged on a substrate, the above diameter ratio preferably relates to at least one array, more preferably all arrays.

It may be most preferred for the invention that the relief features and the images have an identical pattern, wherein each image is superimposed with a relief feature which has at least the same maximum diameter as the image and which is centrally arranged on top of the image.

### Flexographic printing/casting plate

The flexographic printing plate, the flexographic casting plate or both may be made of a plastic material, for example polypropylene, high density polyethylene, low density polyethylene, linear low density polyethylene, polyethylene terephthalate, and combinations of two or more thereof, preferably polypropylene.

The flexographic printing plate, the flexographic casting plate or both may be flexible or rigid, preferably flexible.

According to the invention, the flexographic printing plate, the flexographic casting plate or both may be made by a process comprising injection molding, blow molding, embossing, printing, engraving, or combinations thereof.

It may be preferred according to the invention that the flexographic printing plate, the flexographic casting plate or both are made by a process comprising the following steps:
i. providing a flexible patterned substrate;
ii. pressing the patterned surface of the patterned substrate onto an uncured soft photopolymer plate to provide a patterned uncured photopolymer plate; and
iii. curing the patterned uncured photopolymer plate to provide the patterned flexographic plate.

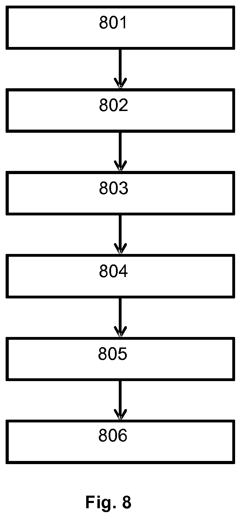

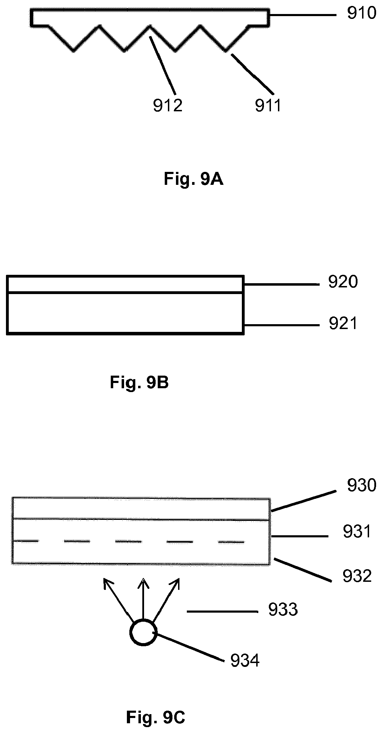

For example, a patterned substrate, can be pressed into an uncured soft photopolymer plate to form a patterned flexographic printing or casting plate, which can be used to impart micro-sized patterns into curable coatings on films. This analog impression process does not require precise equipment control or the use of a wash-out step as known from prior applications. The resulting flexographic printing or casting plate can be used with commercially available coatings, on conventional flexographic equipment, and can last for many thousands of cycles, so the plate is also easy and inexpensive to use. This process is described in further detail with regard to Figs. 8 and 9A-J.

The patterned substrates may be flexible or rigid. Flexible patterned substrates suitable for the invention may be commercially purchased in the form of a flexible patterned film, such as a CAST AND CURE holographic film available from Breit Technologies of Overland Park, Kansas, United States. A flexible patterned substrate can be any suitable material that is flexible (e.g. a thin, pliable, sheet-like material), has suitable pattern of relief features, and can be processed as described with regard to Fig. 8. Examples of flexible patterned substrates include textured paper, fabric, micro-embossed film, optical lens film. Rigid patterned substrates may also be suitable for the invention, such as for example metal sheets, molded plastic sheets, or silicon wafers. Preferably, the patterned substrate is flexible.

The uncured soft photopolymer plate can have various overall thicknesses, for example of from 0.1 mm to 10.0 mm, or from 0.5 to 5 mm or from 0.8 to 3 mm, preferably from 1.0 to 2 mm. An uncured soft photopolymer plate may for example have a thickness of 1.14 mm or of 1.70 mm. The uncured soft photopolymer plate may however also be provided without a protective mask. Uncured soft photopolymers are commercially available in the form of a flexographic plate (with and without a mask layer), such as: CYREL FAST (e.g. types DFUV, DFR, DFM, and DFP) flexographic plates available from DuPont of Wilmington, Delaware, United States or flexographic plates such as types UVR, MAX, and MVP available from MacDermid, Inc. of Morristown, Tennessee, United States. Uncured soft photopolymer plates may be made from one or more suitable materials (such as mixtures of monomers, oligomers, and/or photoinitiators; common forms include acrylates and silicones) that are curable into a hardened state by exposure to visible and/or UV light, as known in the art.

It may be preferred according to the invention that the flexographic printing plate, the flexographic casting plate or both are made by a process comprising the following steps:
(i) providing a rigid patterned substrate; and
(ii) applying a polymeric material, preferably polypropylene, in an injection molding process on the rigid patterned substrate to provide the patterned flexographic plate.

The rigid patterned substrate may be made of a material selected from polymeric materials, metal materials, glass, ceramics, minerals, combinations of two or more thereof, and composite materials of one or more of the aforementioned materials. Preferably, the rigid patterned substrate is a patterned steel plate. The pattern in the rigid substrate can be formed by any suitable method for patterning rigid substrates, for example injection molding, blow molding, embossing, printing, engraving, or combinations thereof Preferably, the pattern of the rigid patterned substrate is made by laser pulse engraving.

The polymeric material may be a thermoplastic resin, for example selected from polypropylene, high density polyethylene, low density polyethylene, linear low density polyethylene, polyethylene terephthalate, and combinations of two or more thereof. Preferably, the polymeric material is polypropylene.

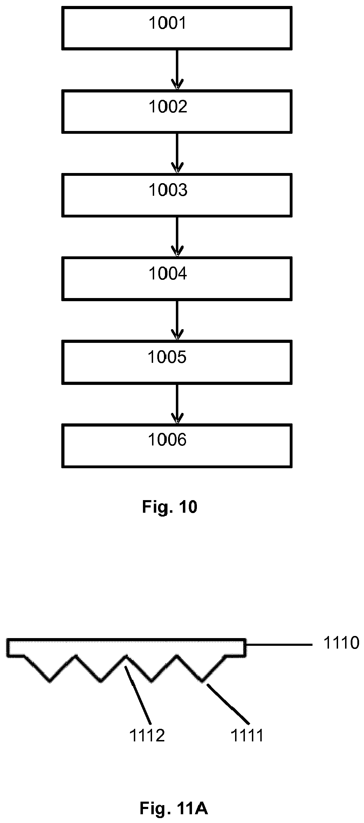

The polymeric material may be applied in an injection molding process on the rigid patterned substrate. The general operation of injection molding is commonly known in the art. For example, the following procedure may be followed:
The polymeric material is heated to a molten or malleable state. The material is then forced through a nozzle onto the rigid patterned substrate which serves as a mold cavity. The plastic material is then cooled on the mold, for example by the mold as such remaining cold, by external cooling, or both. This process is described in further detail with regard to Figs. 10 and 11A-B.

The invention further relates to 3D-microoptic image packaging systems comprising
A. a flexible substrate having a first and a second major surface;
B. a plurality of images on at least part of the first major surface;
C. a transparent varnish layer on the first major surface of the substrate superimposing the printed images.

Therein, the varnish layer has an inner surface being in contact with the printed first major surface of the substrate and an outer surface facing away from the substrate. Further, the varnish layer has a plurality of relief features on the outer surface of the varnish layer.

The preferred embodiments of the flexible substrate, the images, the varnish layer and the relief features described above with regard to the method according to the invention also apply to the flexible substrate, the images, the varnish layer and the relief features of the 3D-microoptic image packaging systems.

The 3D-microoptic image packaging systems are suitable for food and non-food packaging systems, for example for packaging personal care and pharma products, household and gardening products, entertainment and media products, electronic devices, toys, sports products.

### PREFERRED EMBODIMENTS OF THE INVENTION

1) Method for printing 3D-microoptic images on packaging systems by an in-line process comprising
   a. providing a flexible substrate having a first and a second major surface;
   b. printing a plurality of images on at least part of the first major surface of the substrate to provide a substrate with a printed first major surface;
   c. applying a transparent varnish layer on the printed first major surface of the substrate, wherein the varnish layer has an inner surface being in contact with the printed first major surface of the substrate and an outer surface facing away from the substrate; and
   d. forming a plurality of relief features on the outer surface of the varnish layer.
2) The method according to embodiment 1), wherein the flexible substrate is a plastic foil or plastic film.
3) The method according to any of the preceding embodiments, wherein the flexible substrate is selected from the group consisting of high density polyethylene, low density polyethylene, linear low density polyethylene, polypropylene and polyethylene terephthalate.
4) The method according to any of the preceding embodiments, wherein the substrate is non-porous.
5) The method according to any of the preceding embodiments, wherein the flexible substrate is a non-porous plastic foil or plastic film selected from the group consisting of high density polyethylene, low density polyethylene, linear low density polyethylene, polypropylene and polyethylene terephthalate.
6) The method according to any of the preceding embodiments, wherein the images are printed by flexographic printing using a flexographic printing plate, preferably via ink-stations on a flexographic printing press.
7) The method according to any of the preceding embodiments, wherein the images are micro-images.
8) The method according to any of the preceding embodiments, wherein the images are arranged in a regular pattern.
9) The method according to any of the preceding embodiments, wherein the image size is at least 300 µm, more preferably in the range of from 300 µm to less than 1 mm.
10) The method according to any of the preceding embodiments, wherein the distance between the images is in the range of from 3 µm to 3 mm, preferably from 30 µm to 3 mm, more preferably from 100 to 500 µm
11) The method according to any of the preceding embodiments, wherein the image size is at least 300 µm, more preferably in the range of from 300 to less than 1 mm, and wherein the distance between the images is in the range of from 3 µm to 3 mm, preferably from 30 µm to 3 mm, more preferably from 100 to 500 µm.
12) The method according to any of the preceding embodiments, wherein the varnish is heat curable, light curable or both, preferably UV curable.
13) The method according to any of the preceding embodiments, wherein the varnish is an acrylic varnish.
14) The method according to any of the preceding embodiments, wherein the varnish is heat curable, light curable or both, preferably UV curable, preferably wherein the varnish is an acrylic varnish.
15) The method according to any of the preceding embodiments, wherein the relief features on the varnish layer are formed by a filmless casting process using a flexographic casting plate.
16) The method according to any of the preceding embodiments, wherein the relief features have a height in the range of from 50 nm to 150 µm, preferably from 10 to 30 µm.
17) The method according to any of the preceding embodiments, wherein the relief features are micro-lenses, preferably in the shape of partial spheres.
18) The method according to any of the preceding embodiments, wherein the relief features have a height in the range of from 50 nm to 150 µm, preferably from 10 to 30 µm, and wherein the relief features are micro-lenses, preferably in the shape of partial spheres.
19) The method according to any of the preceding embodiments, wherein the relief features and the images have an identical pattern, preferably wherein each image is superimposed with a relief feature which has at least the same maximum diameter as the image and which is centrally arranged on top of the image.
20) The method according to embodiments 6) to 19), wherein the flexographic printing plate, the flexographic casting plate or both are made by a process comprising injection molding, blow molding, embossing, printing, engraving, or combinations thereof.
21) The method according to embodiment 20), wherein the flexographic printing plate, the flexographic casting plate or both are made of a plastic material, preferably polypropylene.
22) The method according to embodiments 20) or 21), wherein the flexographic printing plate, the flexographic casting plate or both are flexible.
23) The method according to embodiment 20), wherein the flexographic printing plate, the flexographic casting plate or both are flexible and made of a plastic material, preferably polypropylene.
24) The method according to any of embodiments 20) to 23), wherein the flexographic printing plate, the flexographic casting plate or both are made by a process comprising the following steps:
   i. providing a flexible patterned substrate;
   ii. pressing the patterned surface of the patterned substrate onto an uncured soft photopolymer plate to provide a patterned uncured photopolymer plate; and
   iii. curing the patterned uncured photopolymer plate to provide the patterned flexographic plate.
25) The method according to any of embodiments 20) to 23), wherein the flexographic casting plate, the flexographic casting plate or both are made by a process comprising the following steps
   (i) providing a rigid patterned substrate; and
   (ii) applying a polymeric material, preferably polypropylene, in an injection molding process on the rigid patterned substrate to provide the patterned flexographic plate.
26) The method according to embodiment 25), wherein the rigid patterned substrate is a patterned steel plate.
27) The method according to any of embodiments 25) or 26), wherein the pattern of the rigid patterned substrate is made by laser pulse engraving.
28) The method according to any of embodiments 20) to 23), wherein the flexographic casting plate, the flexographic casting plate or both are made by a process comprising the following steps
   (i) providing a rigid patterned substrate, preferably a patterned steel plate made by laser pulse engraving; and
   (ii) applying a polymeric material, preferably polypropylene, in an injection molding process on the rigid patterned substrate to provide the patterned flexographic plate.
29) 3D-microoptic image packaging system comprising
   A. a flexible substrate having a first and a second major surface;
   B. a plurality of images on at least part of the first major surface;
   C. a transparent varnish layer on the first major surface of the substrate superimposing the printed images, wherein the varnish layer has an inner surface being in contact with the printed first major surface of the substrate and an outer surface facing away from the substrate; and wherein the varnish layer has a plurality of relief features on the outer surface of the varnish layer.

### DETAILED DESCRIPTION OF THE FIGURES

Fig. 1 shows a schematic view of a printed substrate with a regular pattern of images.

In Figs. 2A-2C, top views of varnish layers with preferred top view shapes of continuous relief features are shown. Fig. 2A shows straight relief features. Fig. 2B shows wave-like relief features. Fig. 2C shows zigzag-shaped relief features.

In Figs. 3A-3I, top views of varnish layers with preferred top view shapes of discontinuous relief features are shown. Figs. 3A and 3B show a circular shape of the relief features. Figs. 3C-3E show a square shape of the relief features. Fig. 3F shows a rhombic shape of the relief features. Figs. 3G-3I show star-shaped relief features.

In Figs. 4A-4G, side views of varnish layers with preferred side view shapes of the relief features are shown. Fig. 4A shows a triangular shape of the relief features. Fig. 4B shows a trapezoid shape of the relief features. Fig. 4C shows a square shape of the relief features. Figs. 4D and 4E show a rectangular shape of the relief features. Fig. 4F shows relief features in the shape of partial spheres. Fig. 4G shows relief features in the shape of partial ellipsoids.

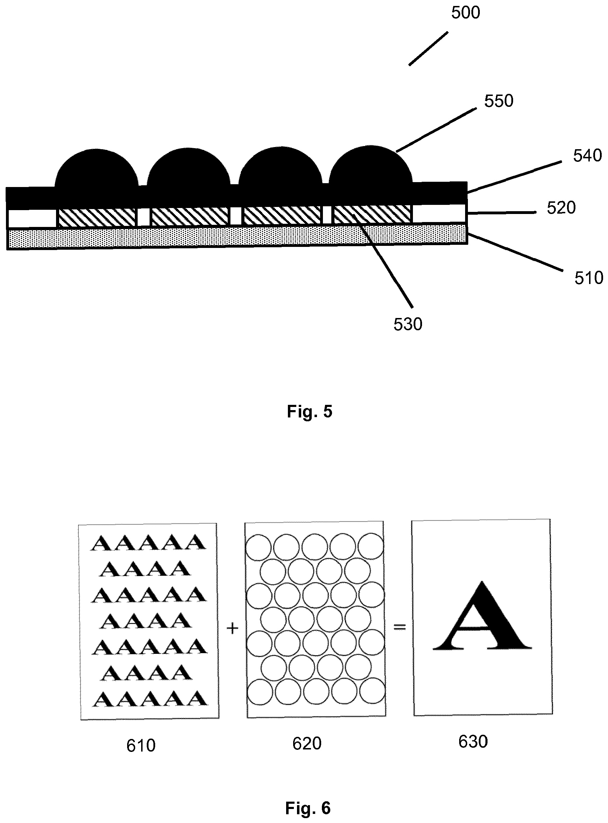

Fig. 5 shows an example of a microoptic image packaging system 500 from a side view. The system comprises a substrate 501, an ink layer 520 comprising micro-images 530, and a varnish layer 540. The varnish layer 540 is superimposed on the ink layer 520. The inner surface of the varnish layer 540 is in contact with the ink layer. The outer surface of the varnish layer 540 faces away from the ink layer 520 and the substrate 510. On the outer surface of the varnish layer 540, a plurality of relief features 550 is disposed. Each of the images 530 are superimposed with one relief feature 550 which has at least the same maximum diameter as the image 530 and which is centrally arranged on top of the image 530.

Fig. 6 shows a schematic view of the principle of the provision of a 3D micro-optic image from a viewer's perspective: A printed substrate with a regular pattern of micro-images 610 is superimposed with a varnish layer with circular micro-lenses 620. The resulting 3D micro-optic image 630 is caused by a moire magnification effect.

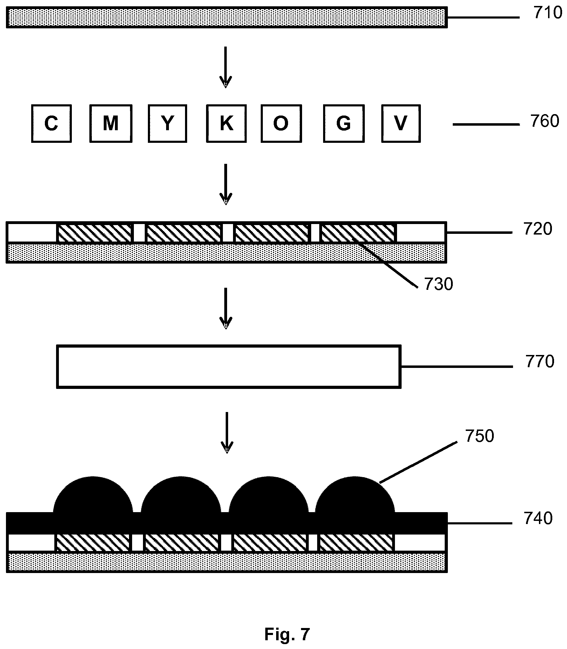

Fig. 7 shows a process according to the invention. A substrate 710 is provided. Via ink stations 760, images are printed on the substrate 710 on a flexographic printing press, providing a printed substrate with an ink layer 720 with micro-images 730 on one surface of the substrate 710. A flexographic casting plate 770 is then used for applying a varnish layer 740 and casting varnish micro-lenses 750 which superimpose the micro-images.

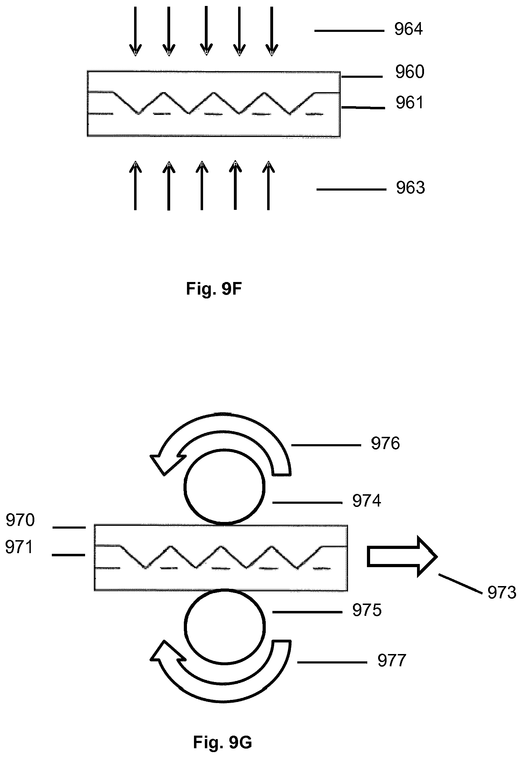

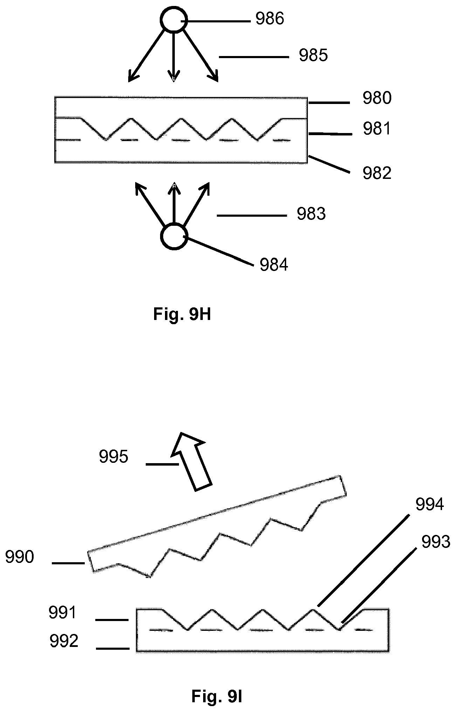

Fig. 8 is a flowchart that illustrates the steps of making a patterned flexographic printing or casting plate according to the invention. Step 801 includes providing a patterned substrate, preferably a flexible patterned substrate, which is described in further detail in connection with Fig. 9A. Step 802 includes providing an uncured soft photopolymer plate, as described in connection with Fig. 9B. Step 803 includes optional pretreatment steps of the plate, as described in connection with Figs. 9C-9E. Step 804 includes impressing the substrate into the plate, as described in connection with Figs. 9F and 9G. Step 805 includes curing the plate, as described in connection with Figs. 9H-9K. Result 806 is the flexographic printing or casting plate resulting from the steps 801-805.

Fig. 9A illustrates an end view of a flexible patterned substrate. At least part of the one major surface of the substrate 910 includes relief features. The relief features are characterized by protrusions 911 and recesses 912. They may for example have a height (measured perpendicular to the substrate from the deepest recess to the tallest protrusion) of 50 nm to 150 µm. The protrusions 911 and the recesses 912 together form an exemplary pattern, which serves as the master pattern for the flexographic printing or casting plate made in the method of Fig. 8. The pattern on the substrate can have relief features that include any number of protrusions and/or recesses of any kind, of any shape, of any aspect ratio, having any distribution known in the art, with any of these configurations variable in any way, preferably so long as the pattern has a height from 50 nm to 150 µm, such as 50 nm to 75 µm, 50 nm to 37 µm, 50 nm to 15 µm, or 50 nm to 7 µm.

Fig. 9B illustrates an end view of an uncured soft photopolymer plate comprising a protective mask 920 and photopolymer material 921. The presence of a protective mask 920 in the uncured soft photopolymer plate is optional.

Fig. 9C illustrates an end view of a step of curing a side of the plate which is the same as the plate of Fig. 9B. A curing source 934, such as a UV light or an electron-beam emitter, emits curing energy 933 (e.g. heat and/or light), which at least partially cures of an outer portion of the photopolymer material, such that the photopolymer material has a cured portion 932 and an uncured portion 931. As an example, a curing source (for use with any curing step disclosed herein) may be a DeGraf Concept 400 ECLF plate curing system (available from GLUNZ & JENSEN of Ringsted, Denmark).

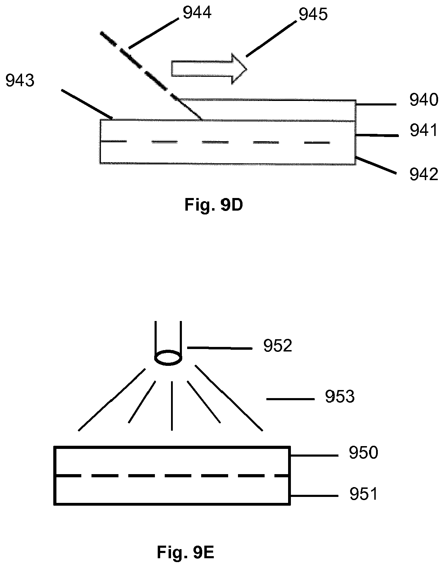

Fig. 9D illustrates an end view of a step of removing the mask 940 from the plate. The removal process 944 (such as laser ablation) comprises removing the mask 940 in direction 945, and exposing an unmasked area 943 on a surface of the uncured portion 941 of the photopolymer material. To prepare the plate for subsequent treating and/or impressing 804, as described below, all of the mask may be removed, such that all of the first side 943 becomes an unmasked area. It is also possible that only part of the protective mask 940 may be removed. In this case, the unmasked area may be continuous or discontinuous. As an example, a mask may be ablated using a CDI Spark 4835 Inline UV Digital Flexo image setter (available from ESKO of Ghent, Belgium).

Fig. 9E illustrates an end view of a step of pretreating the plate. A treating source 952, such as a spray nozzle, a doctor blade, or a draw down rod provides a treatment 953, which at partially treats at least part of an outer portion of the uncured portion 950 of the plate, e.g., to improve its ability to release a surface after contact. An example of said treating is spraying a thin silicone coating. The uncured portion 951 may be partially or fully treated.

Fig. 9F illustrates an end view of a step of impressing the flexible patterned substrate 960 into an exposed surface of the uncured portion 961 of the soft photopolymer plate. Opposing inward forces 963 and 964 provide pressure that presses the substrate 960 and the plate against each other, such that the pattern of the substrate 960 is imparted to the plate and the protrusions and recesses of the pattern shape at least an outer portion of the uncured portion 961 into a pattern that is an inverse of the pattern of the substrate 960. The protrusions and recesses of relief features of the substrate 960 become recesses and protrusions of relief features on the plate. The opposed inward forces can be provided by various kinds of mechanical apparatus known in the art, including, for example, the pressure rollers as shown in Fig. 9G. The impressing step may also include applying heat (e.g. by a heater that provides conduction, convection, and/or radiation) to further soften the soft photopolymer plate before and/or during impressing.

Fig. 9G illustrates a side view of a portion of a mechanical apparatus that can be used in the step of impressing the flexible patterned substrate 970 into an exposed surface of the uncured portion 971 of the soft photopolymer plate. A first roller 974 rotates 976 counterclockwise and a second roller 975 rotates 977 clockwise. The rollers 974 and 975 together provide distributions of opposing inward forces that press the substrate 970 and the plate against each other, such that the pattern of the substrate 970 is imparted to the plate, as the substrate 970 and the plate passes through 973 between the rollers 974 and 975. The pair of rollers 974 and 975 can be provided by a (heated or unheated) roll laminating machine, as known in the art, including, for example, LUX Laminator Model 62 Pro S available from MacDermid, Inc. of Morristown, Tennessee, United States. Substrate and plate may be passed through one or more pairs of such rollers, one or more times, with or without a carrier sheet on either or both sides. Other kinds of laminating machines or presses (with or without rollers) as known in the art may alternatively be used.

Fig. 9H illustrates an end view of a step of partially curing a side of the plate. Therein, the plate is still in contact with the flexible patterned substrate 980 from the impressing step of Figs. 9F and/or 9G. The substrate 980 has material properties, e.g. translucence, that allow for transmission of the curing energy. A first curing source 986 is located outside of the substrate 980 and emits curing energy 985 that travels through the substrate 980. It partially cures at least a portion of the uncured portion 981 of the photopolymer material. A second curing source 984 is located outside of the cured portion of the plate 982 and emits curing energy 983 that travels through the plate. The plate has material properties, e.g. translucence, that allow for transmission of the curing energy. Thereby, at least a portion of the uncured portion 981 of the photopolymer material is cured, such that the uncured portion 981 becomes at least partially cured. Thereby, the substrate 980 can be more easily removed from the plate without distorting or damaging the pattern formed on the plate. It is also possible that one or more curing sources are used on only one side. Typically, curing energy falls within the UV spectrum, such as UV-A (315 to 400 nm wavelengths), UV-B (280 to 315 nm wavelengths), and UV-C (100 to 280 nm wavelengths), and can be provided by various sources, such as mercury bulbs or LED fixtures configured to provide such wavelengths. As an alternative, the step of partial curing is replaced by a step of full curing, so that the partially cured portion 981 is fully cured. As a further alternative, the step of partial curing is omitted, so that the partially cured portion 981 is uncured.

Fig. 9I illustrates an end view of a side of the plate. The flexible patterned substrate 990 is removed 995 from the plate, e.g., by pulling or peeling away. The photopolymer material of the plate has a cured portion 992 and a portion 991, which depending on previous steps may be uncured, partially cured or fully cured. At least part of the portion 991 includes protrusions 994 and recesses 993, which together form an exemplary pattern, which is the imparted pattern on the flexographic printing plate.

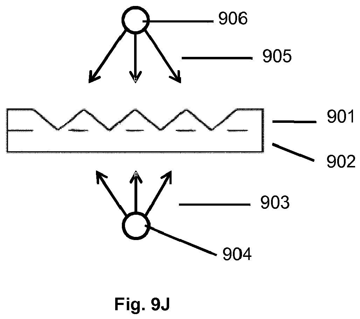

Fig. 9J illustrates an end view of a step of fully curing the photopolymer material of the plate. A first curing source 906 located outside of the portion 901 of the plate emits curing energy 905 that travels to the portion 901 and contributes to fully curing portion 901. A second curing source 904 located outside of the cured portion 902 of the plate emits curing energy 903 that travels through the cured portion 902 which has material properties (e.g. translucence) that allow for transmission of the curing energy. Said curing energy 903 contributes to fully curing portion 901, such that the portion 901 becomes fully cured. Thereby, the pattern formed on the plate is finally cured, and the plate is further prepared for end use.

As an alternative, 906 is a first treating source emitting detackifying energy 905 that travels to the portion 901 and contributes to fully curing portion 901 by further polymerization of the photopolymer material. 904 is a second treating source emitting detackifying energy 903 that travels through the cured portion 902 that contributes to further polymerization of the photopolymer material. Thereby, the pattern formed on the plate is finally cured, and the plate is further prepared for end use.

One or more treating sources may be used on only one side. A cured photopolymer plate may be detackified in any other way known in the art, for example by immersing the plate in one or more chemical solutions (such as a halogen solution). The step of detackifying the plate is optional. Typically, detackifying energy falls within the UV-C spectrum (100 to 280 nm wavelengths).

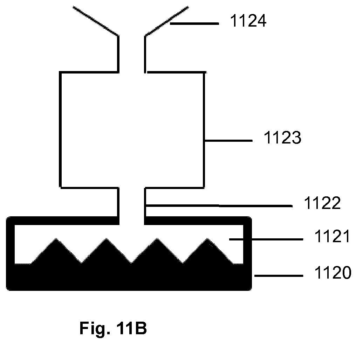

Fig. 10 is a flowchart that illustrates the steps of making a patterned flexographic printing or casting plate according to the invention. Step 1001 includes providing a rigid patterned substrate, preferably a patterned steel plate, which is described in further detail in connection with Fig. 11A. Step 1002 includes providing a polymeric material, preferably polypropylene. Step 1003 includes heating the polymeric material in order to bring it in a molten or malleable state. Step 1004 includes forcing the molten or malleable polymeric material onto the substrate, e.g., as described in connection with Fig. 11B. Step 1005 includes cooling the polymeric material. Result 1006 is the flexographic printing or casting plate resulting from the steps 1001-1005.

Fig. 11A illustrates an end view of a rigid patterned substrate. At least part of the one major surface of the substrate 1110 includes relief features. The relief features are characterized by protrusions 1111 and recesses 1112. They may for example have a height (measured perpendicular to the substrate from the deepest recess to the tallest protrusion) of 50 nm to 150 µm. The protrusions 1111 and the recesses 1112 together form an exemplary pattern, which serves as the master pattern for the flexographic printing or casting plate made in the method of Fig. 10. The pattern on the substrate can have relief features that include any number of protrusions and/or recesses of any kind, of any shape, of any aspect ratio, having any distribution known in the art, with any of these configurations variable in any way, preferably so long as the pattern has a height from 50 nm to 150 µm, such as 50 nm to 75 µm, 50 nm to 37 µm, 50 nm to 15 µm, or 50 nm to 7 µm.

Fig. 11A illustrates an injection molding device. A solid polymeric material is loaded in a vessel 1123 via a hopper 1124. The vessel 1123 is heatable, so that the polymeric material can be molten or made malleable in the vessel 1123. As an alternative, a polymeric material can be loaded into the vessel 1123 in an already molten or malleable state. From the vessel 1123, the molten or malleable polymeric material is forced through a nozzle 1122 into a cavity 1121 that is defined by a mold 1120. The mold 1120 comprises a rigid patterned substrate as shown in Fig. 11A.

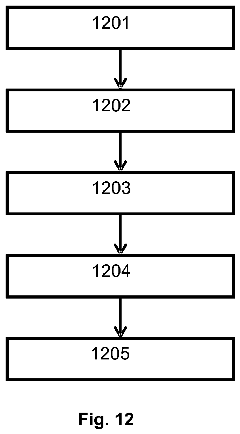

Fig. 12 is a flowchart that illustrates the steps of printing 3D-microoptic images on packaging systems in an inline process. Step 1201 includes providing a flexible substrate, preferably a plastic foil or a plastic film. Step 1202 includes printing plurality of images on the first major surface of the substrate. Step 1203 includes applying a varnish layer on the printed first major surface of the substrate. Step 1204 includes forming a plurality of relief features on the outer surface of the varnish layer. Result 1205 is a 3D-microoptic image packaging system resulting from the steps 1201-1204. The 3D-microoptic effect is caused by the overlaying of images and relief features resulting in a moire magnification effect.

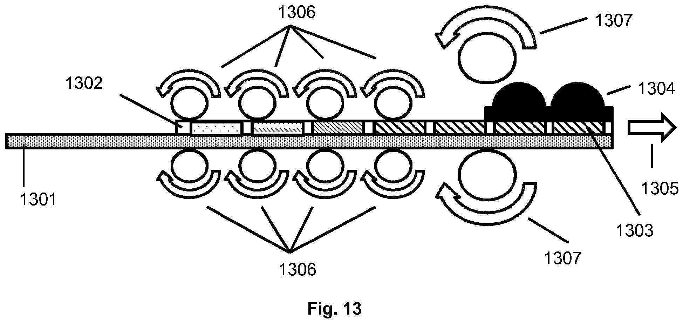

Fig. 13 is a schematic view of a flexographic printing press suitable for printing 3D-microoptic images on packaging systems. The flexible substrate 1301 passes through the flexographic printing press in the indicated direction 1305. During passing through the flexographic printing press, an ink layer 1302 comprising a plurality of images 1303 is printed on the substrate 1301 via ink stations 1306, wherein each of the ink stations 1306 contributes part of the images 1303. A varnish layer comprising a plurality of relief features 1034 is casted via a varnish station 1307.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. Method for printing 3D-microoptic images on packaging systems by an in-line process comprising
a. providing a flexible substrate having a first and a second major surface;
b. printing a plurality of images on at least part of the first major surface of the substrate to provide a substrate with a printed first major surface;
c. applying a transparent varnish layer on the printed first major surface of the substrate, wherein the varnish layer has an inner surface being in contact with the printed first major surface of the substrate and an outer surface facing away from the substrate; and
d. forming a plurality of relief features on the outer surface of the varnish layer.

2. The method according to claim 1, wherein the flexible substrate is a non-porous plastic foil or plastic film selected from the group consisting of high density polyethylene, low density polyethylene, linear low density polyethylene, polypropylene and polyethylene terephthalate.

3. The method any of the preceding claims, wherein the images are printed by flexographic printing using a flexographic printing plate, preferably via ink-stations on a flexographic printing press.

4. The method according to any of the preceding claims, wherein the images are micro-images.

5. The method according to any of the preceding claims, wherein the images are arranged in a regular pattern.

6. The method according to any of the preceding claims, wherein the image size is at least 300 µm, more preferably in the range of from 300 µm to less than 1 mm, and wherein the distance between the images is in the range of from 3 µm to 3 mm, preferably from 30 µm to 3 mm, more preferably from 100 to 500 µm.

7. The method according to any of the preceding claims, wherein the varnish is heat curable, light curable or both, preferably UV curable, preferably wherein the varnish is an acrylic varnish.

8. The method according to any of the preceding claims, wherein the relief features on the varnish layer are formed by a filmless casting process using a flexographic casting plate.

9. The method according to any of the preceding claims, wherein the relief features have a height in the range of from 50 nm to 150 µm, preferably from 10 to 30 µm, and wherein the relief features are micro-lenses, preferably in the shape of partial spheres.

10. The method according to any of the preceding claims, wherein the relief features and the images have an identical pattern, preferably wherein each image is superimposed with a relief feature which has at least the same maximum diameter as the image and which is centrally arranged on top of the image.

11. The method according to claims 3 or 8, wherein the flexographic printing plate, the flexographic casting plate or both are made by a process comprising injection molding, blow molding, embossing, printing, engraving, or combinations thereof.

12. The method according to claim 11, wherein the flexographic printing plate, the flexographic casting plate or both are flexible and made of a plastic material, preferably polypropylene.

13. The method according to any of claims 11 or 12, wherein the flexographic printing plate, the flexographic casting plate or both are made by a process comprising the following steps:
i. providing a flexible patterned substrate;
ii. pressing the patterned surface of the patterned substrate onto an uncured soft photopolymer plate to provide a patterned uncured photopolymer plate; and
iii. curing the patterned uncured photopolymer plate to provide the patterned flexographic plate.

14. The method according to any of claims 11 or 12, wherein the flexographic casting plate, the flexographic casting plate or both are made by a process comprising the following steps
(i) providing a rigid patterned substrate, preferably a patterned steel plate made by laser pulse engraving; and
(ii) applying a polymeric material, preferably polypropylene, in an injection molding process on the rigid patterned substrate to provide the patterned flexographic plate.

15. 3D-microoptic image packaging system comprising
A. a flexible substrate having a first and a second major surface;
B. a plurality of images on at least part of the first major surface;
C. a transparent varnish layer on the first major surface of the substrate superimposing the printed images, wherein the varnish layer has an inner surface being in contact with the printed first major surface of the substrate and an outer surface facing away from the substrate; and wherein the varnish layer has a plurality of relief features on the outer surface of the varnish layer.
